# EUROPEAN PATENT APPLICATION

(11) **EP 1 538 760 A1**
(43) Date of publication of application: **08.06.2005**
(21) Application number: 04734903.0
(22) Date of filing: 26.05.2004
(51) Int. Cl.: H04B 1/38, H05K 7/14, H05K 7/20

(54) **BASE STATION DEVICE**

(30) Priority: 12.06.2003 JP 2003168502; 12.06.2003 JP 2003168503
(71) Applicant: MATSUSHITA ELECTRIC INDUSTRIAL CO., LTD., Kadoma-shi, Osaka 571-8501 (JP)
(72) Inventor: EGAWA, Manabu, Kanagawa 226-0011 (JP)
(74) Representative: Grünecker, Kinkeldey, Stockmair & Schwanhäusser Anwaltssozietät
(86) International application number: PCT/JP2004/007545
(87) International publication number: WO 2004/112266

(57) **Abstract**

An external container is divided into IF unit 120 as a first flat-type external container that holds T-PA unit 140 provided with transmission power amplifier T-PA which amplifies transmission and reception signals and that is fixed to an installation place, and MDE unit 110 as a second flat-type external container that holds a circuit board of modulation and demodulation equipment (MDE) which modulates and demodulates transmission and reception signals and that is detachably attached to the first external container, MDE unit 110 is disposed on the outside of IF unit 120 with heat dissipation space provided therebetween, and a fin as a radiating member is provided on each of opposite faces of IF unit 120 and MDE unit 110.

## Description

### Technical Field

The present invention relates to a base station in a communication system, and more particularly, to a base station suitable for use as a radio base transceiver station in a 3rd generation mobile communication system.

Further, the present invention relates to a motherboard on which is provided a plurality of motherboard connectors connected to respective printed-circuit board connectors provided on a plurality of printed-circuit boards, and more particularly, to a motherboard and a base station suitable for use in a radio base transceiver station in a communication system.

### Background Art

In recent years, with rapid increases in cellular telephone subscriber, prompt expansion has been required of a communication area of a mobile communication system capable of supporting demand for not only speech communications but also other service such as data, music and image. As is well known, expansion of a communication area of the mobile communication system is carried out by installing a BTS (Base Transceiver Station) in a blind zone which communication signals do not reach.

As a radio base transceiver station (hereinafter, simply referred to as a "base station") of the mobile communication system, in general, a lot of heavy large-size base stations are used each of which is comprised of an external container (or rack) with a height of almost two meters or less storing various equipment, and has a large capacity of several hundred to several thousand channels (for example, see JP 2001-111436).

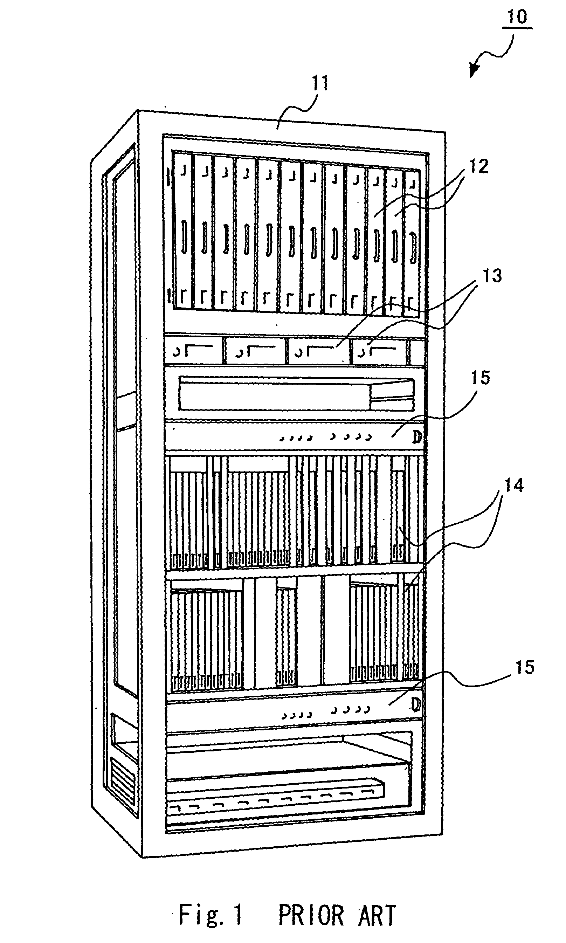

FIG.1 is a perspective view showing an appearance of an example of a conventional large-capacity base station. Base station 10 as shown in FIG.1 has a structure where rack 11 with a height of 1,800mm, width of 800mm and depth of 600mm stores various equipment such as T-PA (Transmission Power Amplifier) 12, T-PA fan 13, MDE (Modulation and Demodulation Equipment) 14 and MDE fan 15.

Conventionally, in the case of installing this kind of large-scale base station outside, for example, the land of about 100m² is reserved to form a foundation, a main body of a base station is mounted on the foundation using heavy equipment, the base portion is fixed using anchors to install, and then, the base station is fenced to protect. Therefore, in order to expand a communication area by installing such a large-scale base station in a blind zone, a great deal of introductory cost and running cost is required.

However, in the case of expanding a communication area by installing the conventional large-scale base station in a blind zone such as a mountainous area having a small number of subscribers as compared with urban areas having a large number of subscribes, since a possibility is high that a high use rate is not expected unlike urban areas, reduction in introductory cost and running cost becomes significant issues.

As one of means for solving such issues, for example, it is considered installing a large-capacity base station conventionally in an urban area with a large number of subscribers, while installing a relatively-inexpensive small-size small-capacity base station in a blind zone such as a mountainous area with a relatively small number of subscribers, and thereby expanding a communication area while suppressing increases in introductory cost and running cost of the entire system.

However, in such a conventional type of base station, for example, even in the case of constituting an extremely small-size and small-capacity base station using a single BB (Base Band signal processor) board with several ten channels, the weight and size of the base station body become significantly great.

Therefore, even when a communication area is expanded using such a small-capacity base station, construction for installation requires machinery and materials to some extent and several operators. In particular, when a base station is placed in a mountainous area such that a construction vehicle cannot reach a target place, it is necessary to carry machinery and materials for installation and a base station body by hands, thereby requiring more manpower and time.

Accordingly, in the case of expanding a communication area using a conventional small-capacity base station that is merely miniaturized, a risk is high of not sufficiently expecting decreases in introductory cost and easy and prompt expansion of communication area.

Meanwhile, this type of base station often causes an initial failure at the time of installation. A delay in service of communication channels due to such a failure becomes a cause of delaying a setup of the entire communication system and creating great disadvantages.

Therefore, when such a failure occurs, in general, in stead of repairing a base station with the failure occurring, construction is carried out for exchanging the station with a new base station to restore communication channels promptly.

However, such construction for exchanging base stations is operation for removing the base station with the failure occurring, and then installing a base station for exchange. Therefore, such exchange construction requires effort and time almost twice more than that in new construction for newly installing a base station.

As described above, this type of conventional base station requires enormous cost and effort for the installation.

Meanwhile, this type of base station has such a structure that a plurality of printed-circuit boards is provided in an external container such as the main body unit or detachable unit in such a way that respective printed-circuit board connectors provided in the printed-circuit boards are connected to a plurality of motherboard connectors of a motherboard attached to the external container.

In the motherboard in this type of conventional base station, the direction for attaching the plurality of printed-circuit boards to the external container is perpendicular to the direction for connecting the respective printed-circuit board connectors of the plurality of printed-circuit boards to the plurality of motherboard connectors of the motherboard.

Therefore, in the conventional motherboard, when the printed-circuit boards are attached to the external container in such a state that the motherboard connectors are connected to the respective printed-circuit board connectors of the plurality of printed-circuit boards, large stress is imposed on the printed-circuit boards due to errors in placement positions between the motherboard connectors and printed-circuit board connectors, and there arises a risk that the printed-circuit boards tend to cause a failure due to the stress.

### Disclosure of Invention

It is a first object of the present invention to provide a base station enabling itself to be installed in a desired installation position readily and promptly, and further enabling great reduction in introductory cost.

It is a second object of the present invention to provide a motherboard enabling a printed-circuit board to be attached to an external container without imposing stress on the printed-circuit board with a motherboard connector connected to a printed-circuit board connector.

In order to achieve the first object, in a base station of the present invention, an external container is divided into a first flat-type external container that is fixed to an installation place and a second flat-type external container that holds circuit boards and that is detachably attached to the first external container, and the second external container is disposed on the outside of the first external container with heat dissipation space provided therebetween.

Further, a base station of the present invention has a first flat-type external container that is fixed to an installation place, and a second flat-type external container that holds a plurality of stacked circuit boards and that is detachably attached to the first external container, where clearance for heat dissipation communicating with outside air is provided between the first external container and the second external container, and the first external container and the second external container are provided opposite to each other in the direction in which the circuit boards are laminated.

Furthermore, in order to achieve the second object, a motherboard of the present invention is provided with a plurality of motherboard connectors connected to respective printed-circuit board connectors provided in a plurality of printed-circuit boards attached to the external container, and is configured in such a manner that the direction of attaching/detaching the printed-circuit board connectors to/from the motherboard connectors is the same as the direction of attaching the printed-circuit boards to the external container.

### Brief Description of Drawings

FIG.1 is a schematic perspective view showing an appearance of a conventional base station;
FIG.2 is a block diagram illustrating a configuration of a base station according to one embodiment of the present invention;
FIG.3 is a perspective view showing an appearance of the base station according to the one embodiment of the present invention;
FIG.4 is a perspective view showing an appearance of disassembled each unit of the base station according to the one embodiment of the present invention;
FIG.5 is a perspective view showing an appearance of a disassembled MDE unit of the base station according to the one embodiment of the present invention;
FIG.6 is a perspective view showing an appearance of a disassembled electronic circuit board of the MDE unit of the base station according to the one embodiment of the present invention;
FIG.7 is a perspective view showing an appearance of the disassembled electronic circuit board of the MDE unit of the base station, as viewed from the back side in FIG.6, according to the one embodiment of the present invention;
FIG.8 is a front view of the base station according to the one embodiment of the present invention;
FIG.9 is a sectional view taken along line a-a of FIG.8;
FIG.10 is a sectional view taken along line b-b of FIG.8;
FIG.11 is a sectional view taken along line c-c of FIG.8;
FIG.12 is a sectional view taken along line d-d of FIG.8;
FIG.13 is a sectional view taken along line e-e of FIG.8;
FIG.14 is a disassembled perspective view showing a state in attaching a T-PA unit to an IF unit of the base station according to the one embodiment of the present invention;
FIG.15 is a disassembled perspective view showing a state in attaching the MDE unit to the IF unit of the base station according to the one embodiment of the present invention;
FIG.16 is a perspective view showing a state where the MDE unit is attached to the IF unit of the base station according to the one embodiment of the present invention;
FIG. 17 is an enlargedperspective view of a connector portion of the IF unit of the base station according to the one embodiment of the present invention;
FIG.18 is a perspective view showing a state in opening a FAN cover and attaching the FAN unit of the base station according to the one embodiment of the present invention;
FIG.19 is an enlarged partial perspective view showing a state in opening the FAN cover and attaching the FAN unit to a FAN unit storage portion of the base station according to the one embodiment of the present invention;
FIG.20 is an enlarged partial perspective view showing a state where the FAN cover is opened and the FAN unit is attached to the FAN unit storage portion of the base station according to the one embodiment of the present invention;
FIG.21 is an enlarged partial perspective view showing a state in opening the FAN cover and connecting the FAN unit attached to the FAN unit storage portion to a terminal board of the base station according to the one embodiment of the present invention;
FIG.22 is a perspective view showing a state prior to locking an MDE case and an MDE cover of the MDE unit of the base station according to the one embodiment of the present invention;
FIG.23 is a perspective view showing a state in locking the MDE case and the MDE cover of the MDE unit of the base station according to the one embodiment of the present invention;
FIG.24 is a perspective view showing a state prior to locking the MDE unit and the IF unit after locking the MDE case and the MDE cover of the MDE unit of the base station according to the one embodiment of the present invention;
FIG.25 is a perspective view showing a state in locking the MDE unit and the IF unit after locking the MDE case and the MDE cover of the MDE unit of the base station according to the one embodiment of the present invention;
FIG.26 is a perspective view showing a state subsequent to locking the MDE unit and the IF unit after locking the MDE case and the MDE cover of the MDE unit of the base station according to the one embodiment of the present invention;
FIG.27 is a perspective view showing the back of the base station according to the one embodiment of the present invention;
FIG.28 is a perspective view showing a state prior to attaching main body fixing members to the back of the base station according to the one embodiment of the present invention; and
FIG.29 is a perspective view showing a state subsequent to attaching the main body fixing members to the back of the base station according to the one embodiment of the present invention.

### Best Mode for Carrying Out the Invention

A base station of the present invention adopts a configuration where an external container is divided into a first flat-type external container that is fixed to an installation place and a second flat-type external container that holds circuit boards and that is detachably attached to the first external container, and the second external container is disposed on the outside of the first external container with heat dissipation space provided therebetween.

By this means, in this base station, since the external container is divided, each part of the external container becomes small in size and the operability is improved. Further, in this base station, since the second external container is disposed on the outside of the first external container with heat dissipation space provided therebetween, the heat dissipation characteristics are extremely improved. Furthermore, in this base station, since the heat dissipation characteristics of each external container is improved, it is possible to further reduce the size and weight.

Moreover, the base station of the present invention adopts a configuration where a radiating member is provided on each of opposite faces of the first external container and the second external container.

By this means, in this base station, since a radiating member is provided on each of opposite faces of the first external container and the second external container, the hear dissipation characteristics are further improved.

The base station of the present invention further adopts a configuration where the first external container holds a power supply.

By this means, in this base station, since the first external container fixed to the installation place holds a power supply which hardly causes a failure and is connected to an external cable, it is only required to exchange the second external container under failure of the circuit board, thereby enabling prompt restoration.

The base station of the present invention further adopts a configuration where the first external container and the second external container each have the airtightness, while communicating with each other in internal space thereof.

By this means, in this base station, since the first external container and the second external container each have the airtightness, while communicating with each other in internal space thereof, it is possible to maintain respective internal temperatures of the external containers uniformly, and it is possible to suppress occurrence of failures due to local heating.

The base station of the present invention further adopts a configuration where the first external container is provided on its upper face with a fan unit to absorb the air from between the first external container and the second external container to discharge.

By this means, in this base station, since the air between the first external container and the second external container is absorbed and discharged by the fan unit, it is possible to forcibly cool the first external container and the second external container. Since the air (hot air) ascends in behavior and the fan unit is provided on the upper face of the first external container, it is possible to efficiently discharge the air (hot air) from between the first external container and the second external container.

The base station of the present invention further adopts a configuration provided with a motherboard in which is provided a plurality of motherboard connectors connected to respective printed-circuit board connectors provided in a plurality of printed-circuit boards, and which is configured so that the direction of attaching/detaching the printed-circuit board connectors to/from the motherboard connectors is the same as the direction of attaching the printed-circuit boards to the external container.

By this means, in this base station, since the direction of attaching/detaching the printed-circuit board connectors to/from the motherboard connectors is the same as the direction of attaching the printed-circuit boards to the external container, it is possible to attach the printed-circuit boards to the external container in such a state that the printed-circuit board connectors are attached to the motherboard connectors, without imposing stress on the printed-circuit boards. Accordingly, in this base station, it is possible to construct a communication system where a failure hardly occurs due to attaching/detaching of the printed-circuit boards.

The base station of the present invention further adopts a configuration provided with a cooling fan to control the temperature inside the external container to which the motherboard is attached, where printed-circuit boards with small areas are provided in a central portion of the external container among a plurality of printed-circuit boards attached to the motherboard, and a ventilation path of the cooling fan is formed between the printed-circuit boards with small areas and the external container.

By this means, in this base station, since printed-circuit boards with small areas are provided in a central portion of the external container, and a ventilation path of the cooling fan is formed between the printed-circuit boards with small areas and the external container, it is possible to efficiently cool each of the printed-circuit boards provided inside the external container by the cooling fan, and to suppress occurrence of failures in each of the printed-circuit boards due to heat.

The base station of the present invention further adopts a configuration provided with a radiating member that cools at least one of the plurality of printed-circuit boards in a state where the plurality of printed-circuit board connectors are connected to the plurality of motherboard connectors.

By this means, in this base station, since at least one of the plurality of printed-circuit boards is cooled by the radiating member in a state where the plurality of printed-circuit board connectors are connected to the plurality of motherboard connectors, it is possible to further suppress occurrence of failures in each of the printed-circuit boards due to heat. In addition, it is also possible to cancel the stress in the case where the motherboard is not used, respective printed-circuit board connectors of a plurality of printed-circuit boards are connected to overlap one another, and the printed-circuit boards are attached to the external container. However, in such a configuration, since the number of pins increases for buses of the printed-circuit board connectors and intervals between the printed-circuit boards decrease, it becomes difficult to provide the radiating member, and an inconvenience occurs such that the heat dissipation characteristics deteriorate in each of the printed-circuit boards. In contrast thereto, in this base station, since printed-circuit board connectors are connected using the motherboard, it is possible to decrease the number of pins for buses of the printed-circuit boards, and increase intervals between the printed-circuit boards freely. Therefore, the versatility is improved in provision of the radiating member, and it is possible to also improve the heat dissipation characteristics in each printed-circuit board.

The base station of the present invention further adopts a configuration where the radiating member has a heat pipe.

By this means, in this base station, since the radiating member has a heat pipe, it is possible to further improve the heat dissipation characteristics of the printed-circuit boards.

A base station of the present invention adopts a configuration provided with a first external container that is fixed to an installation place and a second external container that holds a plurality of stacked circuit boards and that is detachably attached to the first external container, where clearance for heat dissipation communicating with outside air is provided between the first external container and the second external container, and the first external container and the second external container are provided opposite to each other in the direction in which the circuit boards are laminated.

By this means, in this base station, since the first external container and the second external container are provided opposite to each other in the direction in which the circuit boards are laminated, the heat dissipation area communicating with outside air can be increased between the first external container and the second external container, and the second external container can be formed in a flat and small shape.

A motherboard of the present invention is a motherboard in which is provided a plurality of motherboard connectors connected to respective printed-circuit board connectors provided in a plurality of printed-circuit boards attached to an external container, and which is configured so that the direction of attaching/detaching the printed-circuit board connectors to/from the motherboard connectors is the same as the direction of attaching the printed-circuit boards to the external container.

By this means, in this motherboard, since the direction of attaching/detaching the printed-circuit board connectors to/from the motherboard connectors is the same as the direction of attaching the printed-circuit boards to the external container, it is possible to attach the printed-circuit boards to the external container without imposing stress on the printed-circuit boards, in such a state that the printed-circuit board connectors are attached to the motherboard connectors.

The motherboard of the present invention further adopts a configuration where the plurality of printed-circuit boards is a CNT board constituting a control device in modulation and demodulation equipment to modulate and demodulate transmission and reception signals, a TRX board constituting a transmission and reception card, a BB0 board for standard equipment constituting a baseband signal processor, and a BB1 board for expansion constituting a baseband signal processor.

The CNT board, TRX board, BB0 board and BB1 board often cause infant mortality failures in installation. In the case where such a printed-circuit board causes a failure due to the stress at the time of attaching thereof to the external container, it is difficult to immediately determine a cause of the failure, and such a possibility is extremely high that when a new printed-circuit board is attached to exchange, the exchanged printed-circuit board immediately causes the same failure again. In this motherboard, since such various printed-circuit boards are attached to the external container using the motherboard, it is possible to prevent occurrence of failures of the printed-circuit boards due to the stress in attaching the boards to the external container. Accordingly, in this motherboard, when a new printed-circuit board is attached to exchange, it does not happen that the exchanged printed-circuit board immediately causes the same failure due to the stress.

The motherboard of the present invention further adopts a configuration where the external container is comprised of an external container case and an external container cover attached to the external container case to be openable and closable, and the BB1 board for expansion is provided in a portion exposed in a state where the external container cover is opened.

By this means, in this motherboard, since the BB1 board for expansion is provided in a portion exposed in a state where the external container cover is opened, it is possible to perform the operation of attaching or detaching the BB1 board for expansion with ease.

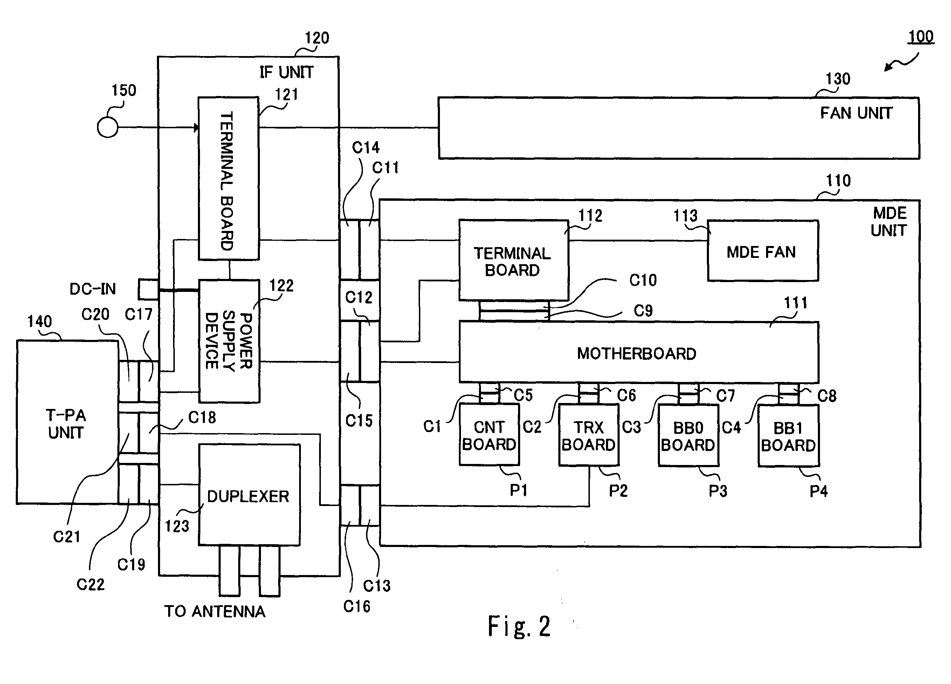

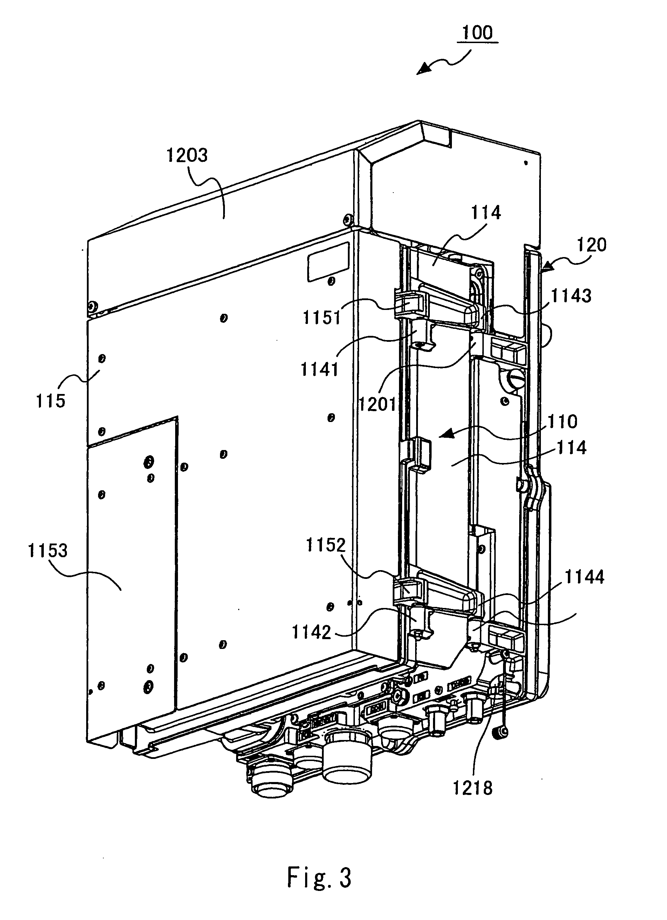

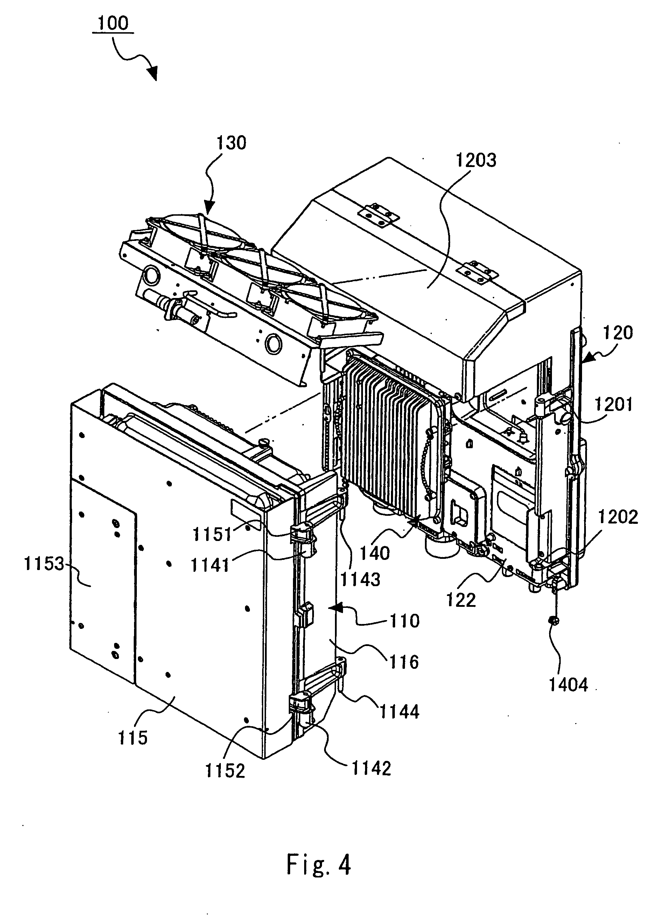

One embodiment of the present invention will specifically be described below with reference to accompanying drawings. FIG.2 is a block diagram illustrating a configuration of a base station according to one embodiment of the present invention. FIG.3 is a perspective view showing an appearance of the base station according to the one embodiment of the present invention. FIG.4 is a perspective view showing an appearance of disassembled each unit of the base station according to the one embodiment of the present invention.

As shown in FIGs.2 to 4, base station 100 according to the one embodiment of the present invention has a configuration with broadly divided four units, MDE unit 110 as the second external container, IF unit 120 as the first external container, FAN unit 130 and T-PA unit 140.

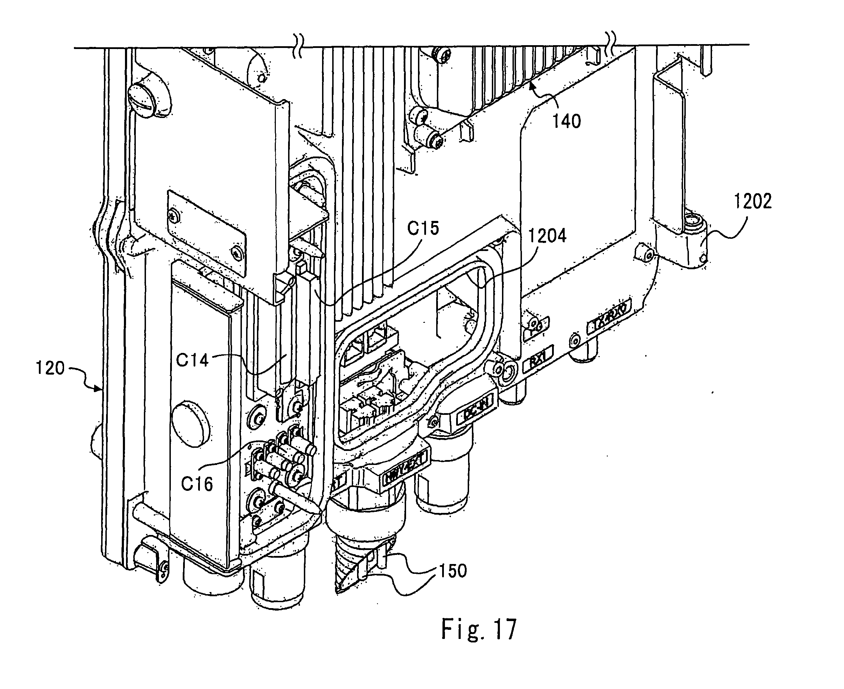

MDE unit 110 is provided with modulation and demodulation equipment (MDE) that performs modulation and demodulation of transmission and reception signals. IF unit 120 is provided with an interface for a device connected to external cables 150 (see FIG.17) such as communication cables. FAN unit 130 is provided with a cooling fan as a heat exchanger that cools internal devices of base station 100. T-PA unit 140 is provided with a transmission power amplifier (T-PA) that amplifies transmission and reception signals.

As shown in FIGs.2, 5, 6 and 7, MDE unit 110 has CNT board P1 comprised of a printed-circuit board constituting a control device, TRX board P2 comprised of a printed-circuit board constituting a transmission and reception card, BB0 board P3 comprised of a printed-circuit board for standard equipment constituting a baseband signal processor, BB1 board P4 comprised of a printed-circuit board for expansion constituting a baseband signal processor, motherboard 111 on which these electronic circuit boards are mounted, terminal board 112 mounted on motherboard 111, and MDE fan 113 as a heat exchanger that controls the internal temperature of MDE unit 110.

As shown in FIG.2, IF unit 120 has terminal board 121 to which external cables 150 are connected, power supply device 122 that supplies the power to terminal board 121 and MDE 110, and duplexer 123 connected to an antenna.

As shown in FIG.4, each of FAN unit 130 and T-PA unit 140 is comprised of a single unit.

As shown in FIGs.2, 6 and 7, CNT board P1 of MDE unit 110 is connected to motherboard 111 via connector C1 thereof and connector C5 of motherboard 111. TRX board P2 is connected to motherboard 111 via connector C2 thereof and connector C6 of motherboard 111. BB0 board P3 is connected to motherboard 111 via connector C3 thereof and connector C7 of motherboard 111. BB1 board P4 is connected to motherboard 111 via connector C4 thereof and connector C8 of motherboard 111.

Motherboard 111 is connected to terminal board 112 via connector C9 thereof and connector C10 of terminal board 112. Further, motherboard 111 is connected to power supply device 122 of IF unit 120 via connector C12 of MDE unit 110 and connector C15 of IF unit 120.

Terminal board 112 is connected to terminal board 121 of IF unit 120 via connector C11 of MDE unit 110 and connector C14 of IF unit 120. Further, terminal board 112 is connected to power supply device 122 of IF unit 120 via connector C12 of MDE unit 110 and connector C15 of IF unit 120.

MDE fan 113 is connected to terminal board 112 of MDE unit 110.

FAN unit 130 is connected to terminal board 121 of IF unit 120.

T-PA unit 140 is connected to power supply device 122 and terminal board 121 of IF unit 120 via connector C20 thereof and connector C17 of IF unit 120. T-PA unit 140 is further connected to TRX board P2 of MDE unit 110 via connector C21 thereof, connector C18 of IF unit 120, connector C16 of IF unit 120 and connector C13 of MDE unit 110. T-PA unit 140 is furthermore connected to duplexer 123 of IF unit 120 via connector C22 thereof and connector C19 of IF unit 120.

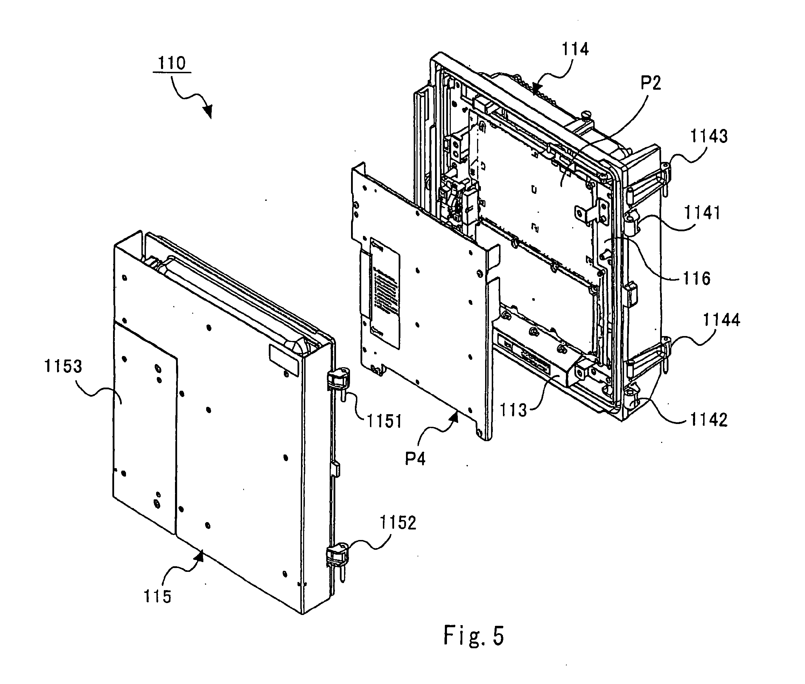

More specifically, as shown in FIGs.5 to 7, MDE unit 110 has such a configuration that the waterproof-processed external container comprised of MDE case 114 and MDE cover 115 holds therein CNT board P1, TRX board P2, BB0 board P3, BB1 board P4, motherboard 111, terminal board 112 and MDE fan 113 as described above.

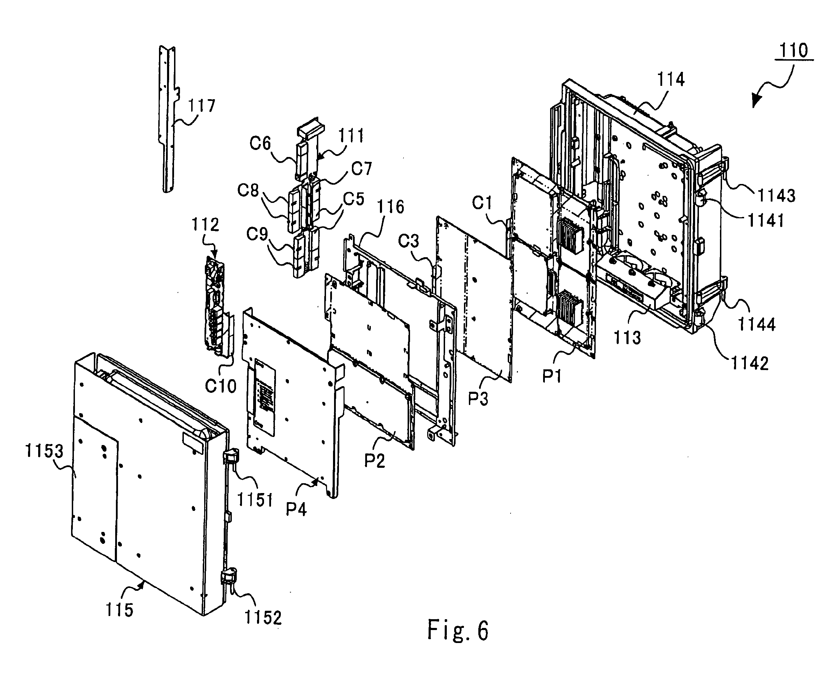

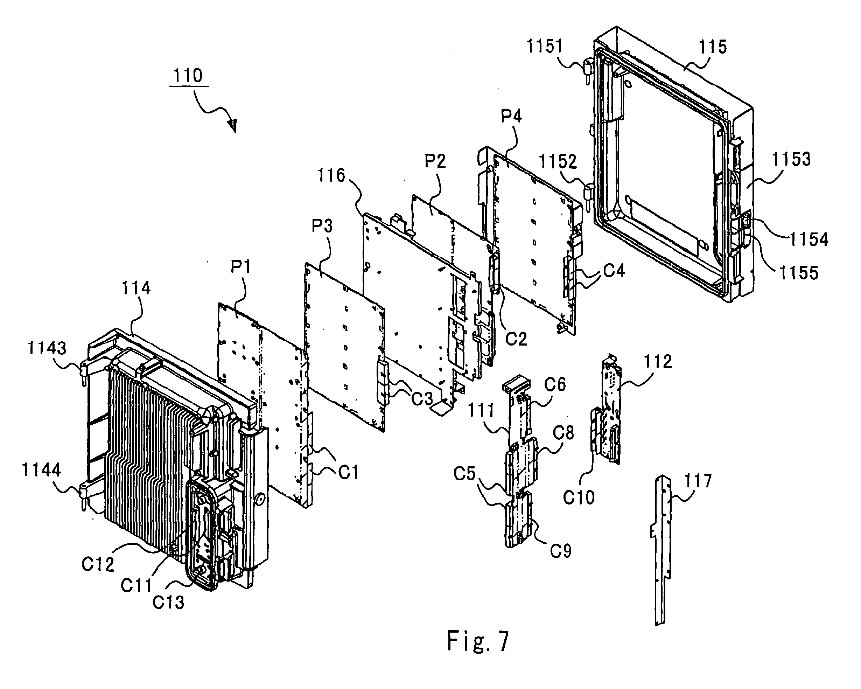

As shown in FIGs.6 and 7, motherboard 111 is mounted on board plate 116 via motherboard mounting hardware 117. Board plate 116 is formed of sheet metal with high heat dissipation characteristics such as aluminum, and is screwed to MDE case 114.

Connectors C1, C2 and C4 respectively of CNT board P1, TRX board P2 and BB1 board P4 and connectors C5, C6 and C8 of motherboard 111 are arranged so that connectors are attached or detached in the direction perpendicular to the plate surface of board plate 116.

By this means, the direction in which CNT board P1, TRX board P2 and BB1 board P4 are attached or detached is the same as the direction in which board plate 116 is screwed in MDE case 114. Therefore, in screwing board plate 116 in MDE case 114, stress is not imposed on CNT board P1, TRX board P2 and BB1 board P4, and an occurrence of infant mortality failure is prevented in attaching the boards.

In addition, BB0 board P3 is attached or detached in the direction parallel to the plate surface of board plate 116. However, connector C3 of the board P3 is attached or detached to/from connector C7 of motherboard 111 beforehand positioned and attached to board plate 116, and therefore, stress is not imposed in attaching the board P3.

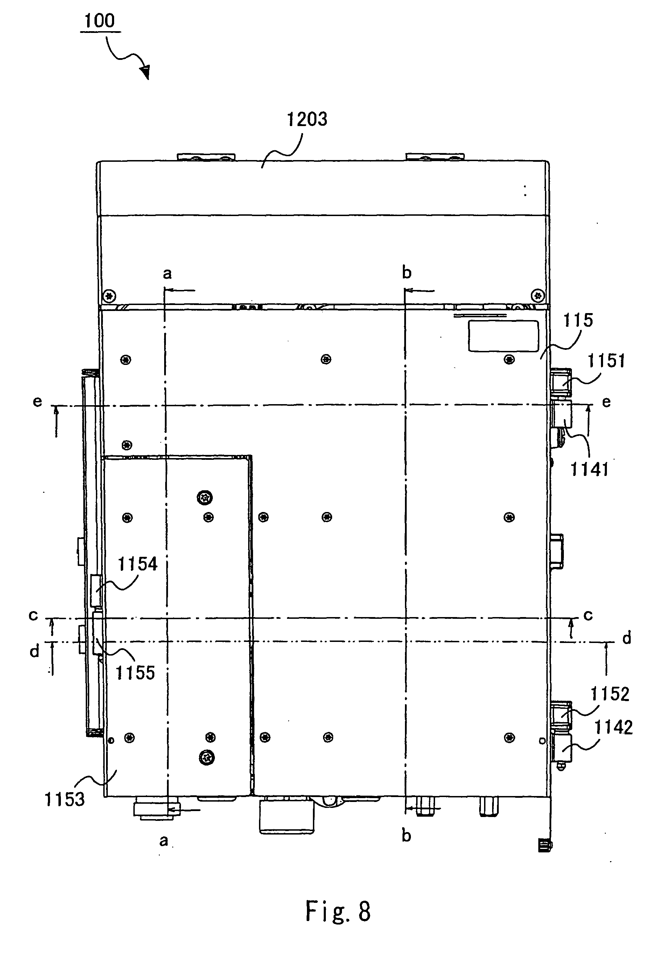

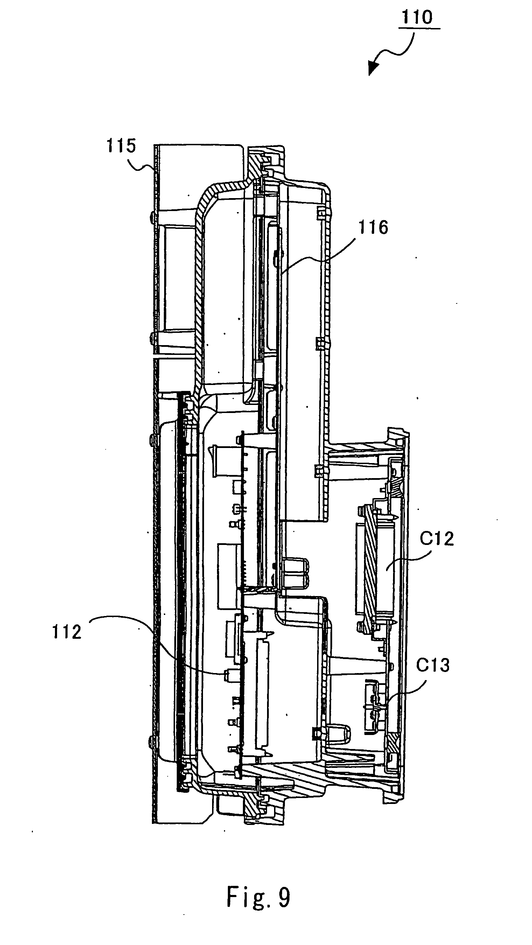

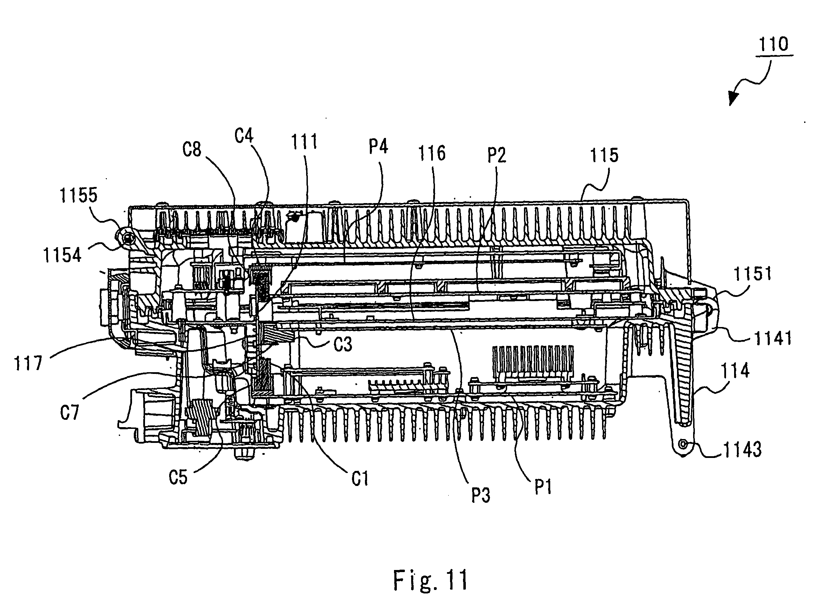

A specific structure where CNT board P1, TRX board P2, BB0 board P3 and BB1 board P4 are attached to MDE unit 110 is shown in each sectional view in FIGs.9, 10, 11, 12 and 13 respectively taken along lines a-a, b-b, c-c, d-d and e-e of FIG.8.

The operation of attaching or detaching CNT board P1, TRX board P2, BB0 board P3 and BB1 board P4 to/from MDE unit 110 is carried out in such a state that MDE cover 115 is opened which is attached to MDE case 114 to be openable and closable with cover hinges 1151 and 1152 and case hinges 1141 and 1142.

BB1 board P4 for expansion is preferably arranged in a portion exposed in such a state that MDE cover 115 is opened which is attached to MDE case 114 to be opened and closed. In other words, since BB1 board P4 is provided in such an exposed position, it is possible to readily perform the operation of attaching or detaching BB1 board P4 to/from MDE unit 110.

Further, the operation of checking or adjusting CNT board P1, TRX board P2, BB0 board P3 and BB1 board P4 is carried out in such a state that small cover 1153 is opened which is attached to MDE cover 115 to be openable and closable with cover hinges 1154 and 1155. In addition, in order to secure the safety, small cover 1153 in a closed state is attached to MDE cover 115 using screws enabling attaching/detaching thereof only in using a specific tool.

In MDE unit 110, as shown in FIGs.5 and 6, among CNT board P1, TRX board P2, BB0 board P3 and BB1 board P4, CNT board P1 that is the largest board is provided in a backmost portion of MDE case 114. TRX board P2, BB0 board P3 and BB1 board P4 formed of small-size printed-circuit boards with relatively small areas are provided in a central portion of MDE case 114.

By this means, ventilation paths are formed between TRX board P2, BB0 board P3 and BB1 board P4 formed of small-size printed-circuit boards and an inner wall of MDE case 114 of MDE unit 110, and therefore, it is possible to efficiently cool each of the printed-circuit boards provided inside MDE unit 110 byMDE fan 113, and to suppress occurrence of failures in each of the printed-circuit boards due to heat.

Further, MDE unit 110 is preferably provided with a radiating member such as, for example, a radiating sheet to cool at least one of CNT board P1, TRX board P2, BB0 board P3 and BB1 board P4 provided in MDE unit 110.

By this means, in such a state that respective connectors of CNT board P1, TRX board P2, BB0 board P3 and BB1 board P4 are connected to motherboard connectors of motherboard 111, at least one of the boards is cooled by the radiatingmember, it is possible to further suppress occurrence of failures in each printed-circuit board due to heat. In addition, a member provided with a heat pipe may be used as the radiating member. By using the heat pipe, it is possible to further improve the heat dissipation characteristics of CNT board P1, TRX board P2, BB0 board P3 and BB1 board P4.

IF unit 120 as described above is configured as a main body unit that is first positioned and placed in installing base station 100 in a predetermined installation portion. The other units, MDE unit 110, FAN unit 130 and T-PA unit 140, are configured as detachable units which are detachably attached to IF unit 120 that is the main body unit.

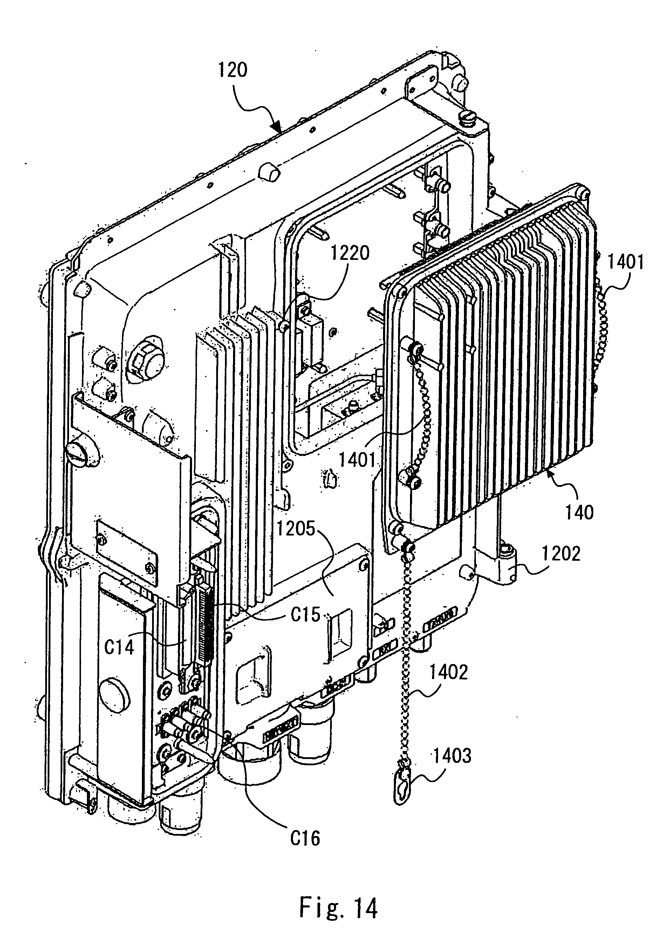

In other words, as shown in FIG.14, T-PA unit 140 is screwed in IF unit 120 while being mounted on a predetermined portion of IF unit 120 with chain-shaped grips 1401 attached to both side faces of the unit 140. Chain 1402 is attached to T-PA unit 140 to prevent the unit 140 from falling in attaching or detaching the unit 140. Chain 1402 is provided at its free end with hook 1403. Hooking hook 1403 on hook pin 1220 of IF unit 120 prevents falling of T-PAunit 140 in attaching or detaching the unit 140.

As shown in FIGs.3, 4 and 5, MDE unit 110 is attached to IF unit 120 to be openable and closable and detachable by engaging or removing MDE unit hinge pins 1143 and 1144 formed on one side face of the unit 110 respectively in/from IF unit hinges 1201 and 1202 formed on the side face of IF unit 120 on the same side.

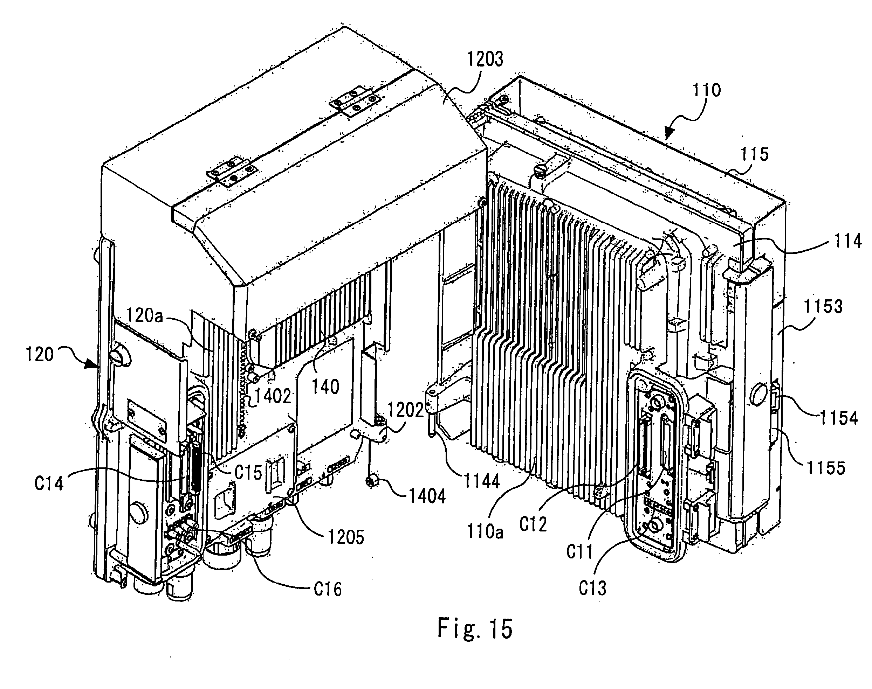

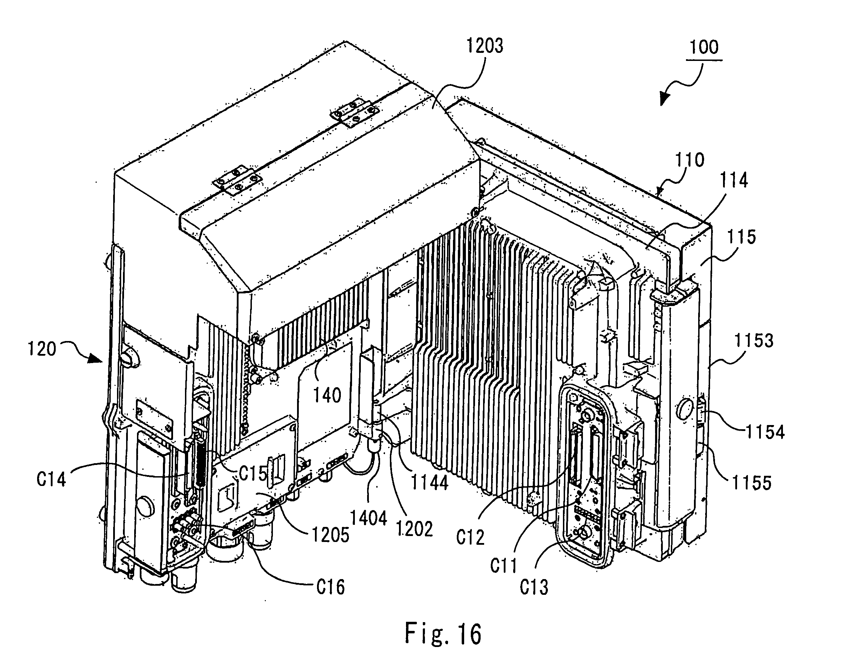

In MDE unit 110, as shown in FIGs.15 and 16, in such a state that MDE unit hinge pin 1144 is engaged in IF unit hinge 1202 of IF unit 120, fall prevention cap 1404 is attached to IF unit 120 is mounted on a front end portion of MDE unit hinge pin 1144. Therefore, MDE unit 110 is prevented from falling from IF unit 120 accidentally, and safety is ensured in the operation for opening and closing MDE unit 110.

In this way, when MDE unit 110 is mounted on IF unit 120 to be openable and closable and closed, connectors C11, C12 and C13 of MDE unit 110 are connected to connectors C14, C15 and C16 of IF unit 120, respectively.

In addition, as shown in FIG.17, small window 1204 is formed on the side portion of each of connectors C14, C15 and C16 of IF unit 120 to facilitate the operation for connecting external cables 150 to equipment provided inside IF unit 120. As shown in FIGs.14, 15 and 16, small window 1204 is closed by protection cover 1205 after connecting external cables 150 to the equipment provided inside IF unit 120. An operator is thereby prevented from erroneously touching a conductive wire of external cables 150 and suffering an electric shock in attaching IF unit 120 to an installation portion, or opening or closing MDE unit 110.

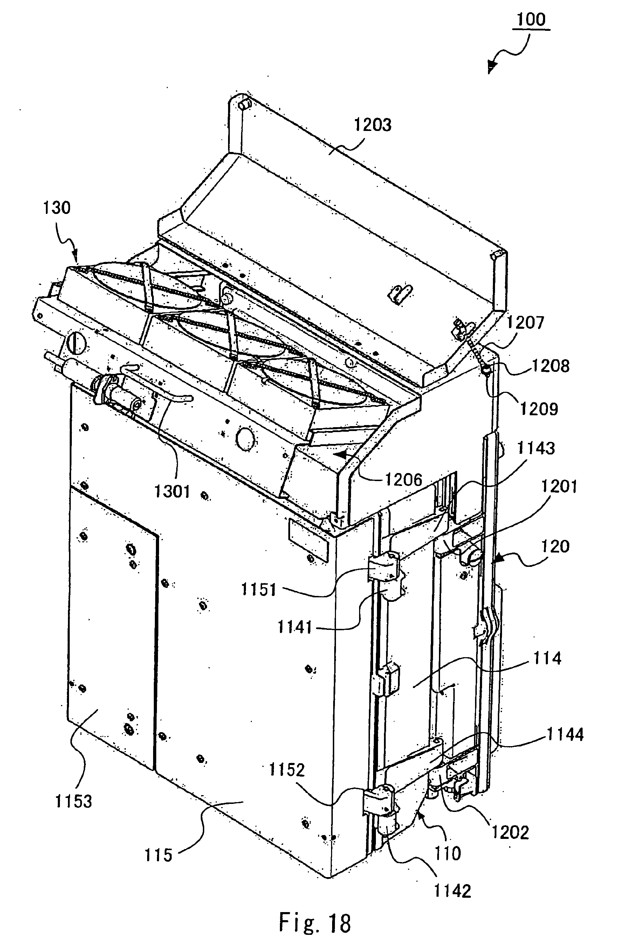

As shown in FIG.18, FAN unit 130 is detachably stored in FAN unit storage portion 1206 as a heat exchanger storage portion provided to extend above the portion of IF unit 120 where MDE unit 110 is attached.

As shown in FIGs.15 and 16, FAN unit storage portion 1206 is closed by FAN cover 1203 when FAN unit 130 is stored. As a screw to fix FAN cover 1203 to FAN unit storage portion 1206, a specific screw is used that is the same as the screw to close small cover 1153. Further, as shown in FIG.18, in FAN cover 1203, locking screw 1208 is provided at a free end of a protection chain to prevent accidental closing, and engaged in screw hole 1209 on the side face of IF unit 120 in a state that FAN unit storage portion 1206 is opened. In this way, an operator is prevented from being caught in clearance caused by FAN cover 1203 accidentally being closed, in attaching or detaching FAN unit 130 to/from FAN unit storage portion 1206.

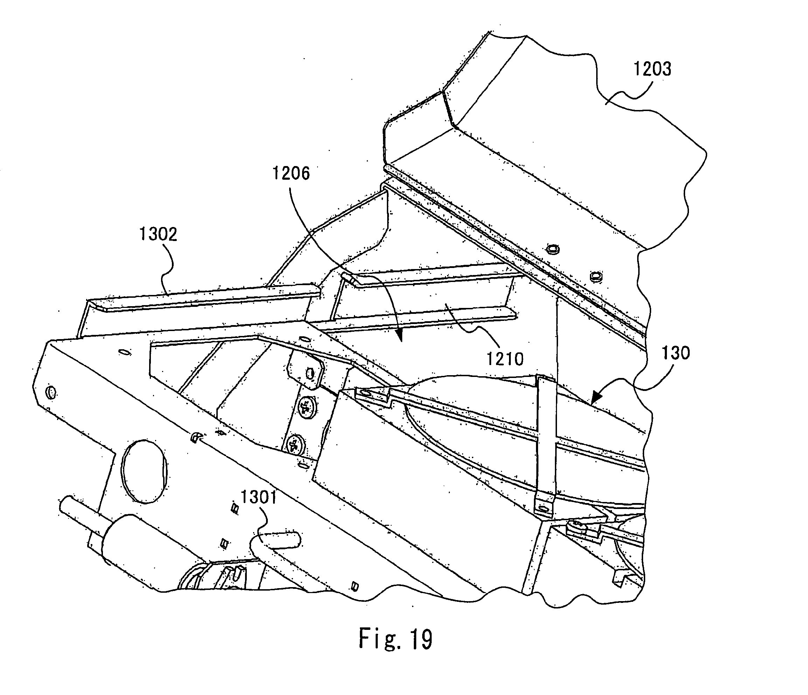

The operation for attaching or detaching FAN unit 130 to/from FAN unit storage portion 1206 is carried out by grasping grip 1301 of FAN unit 130. As shown in FIG. 19, channel-like formed guide rails 1210 are provided on both side portions of FAN unit storage portion 1206. Meanwhile, FAN unit guides 1302 fitted with guide rails 1210 are provided on both side portions of FAN unit 130.

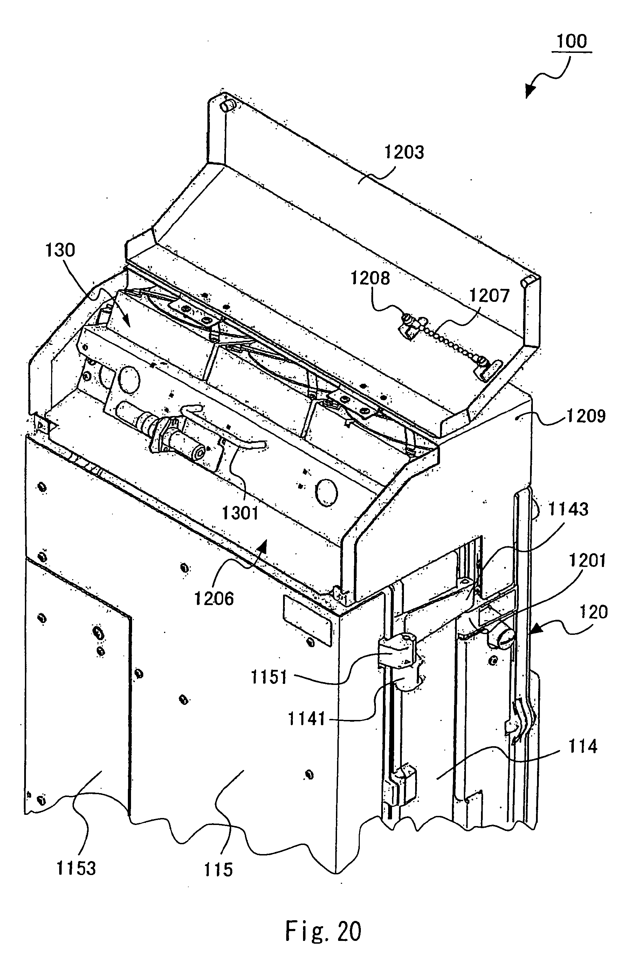

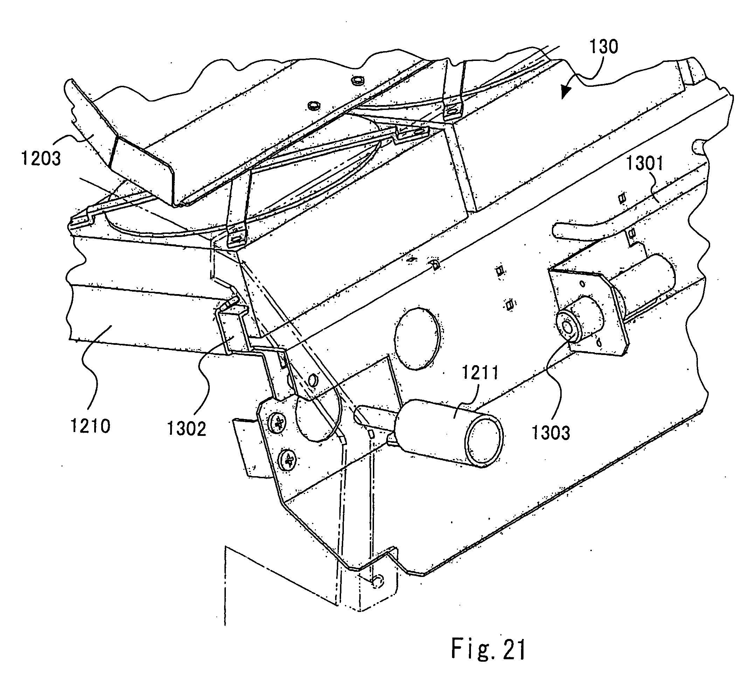

Guide rails 1210 of FAN unit storage portion 1206 are provided to rise toward the front of FAN unit storage portion 1206. Therefore, when guide rails 1210 are fitted with FAN unit guides 1302 of FAN unit 130, as shown in FIG.20, FAN unit 130 is stored in FAN unit storage portion 1206 by weight thereof. In FAN unit 130 stored in FAN unit storage portion 1206, connection terminal 1303 thereof is connected to connection terminal 1211 extending from terminal board 121 (see FIG.21).

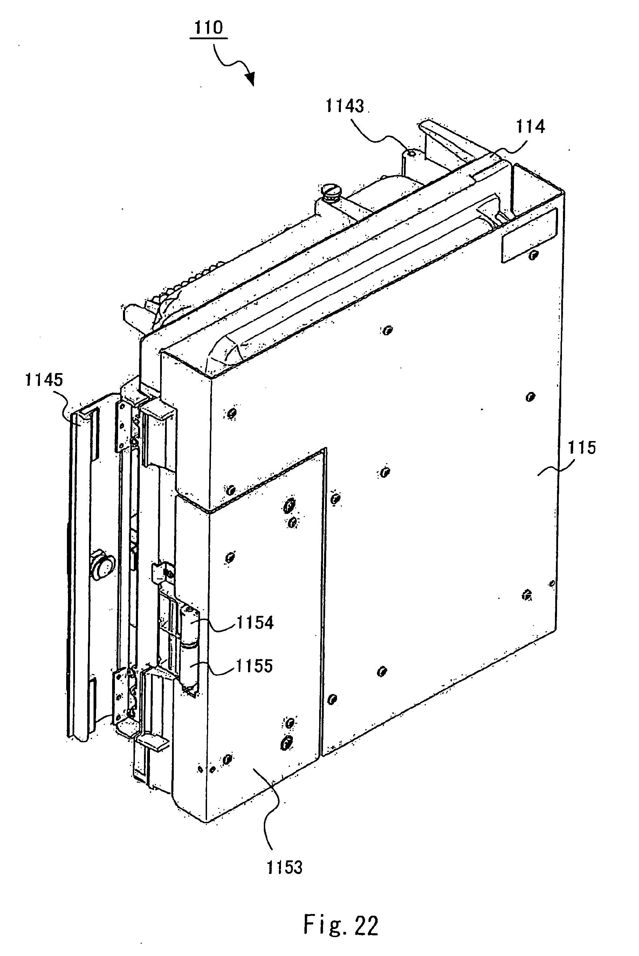

Meanwhile, as shown in FIGs.22, 23 and 24, MDE cover lock plate 1145 is provided on the side face of MDE cover 114 on the open and close side of MDE unit 110, as means for locking MDE cover 115 in MDE case 114 with MDE cover 115 closed.

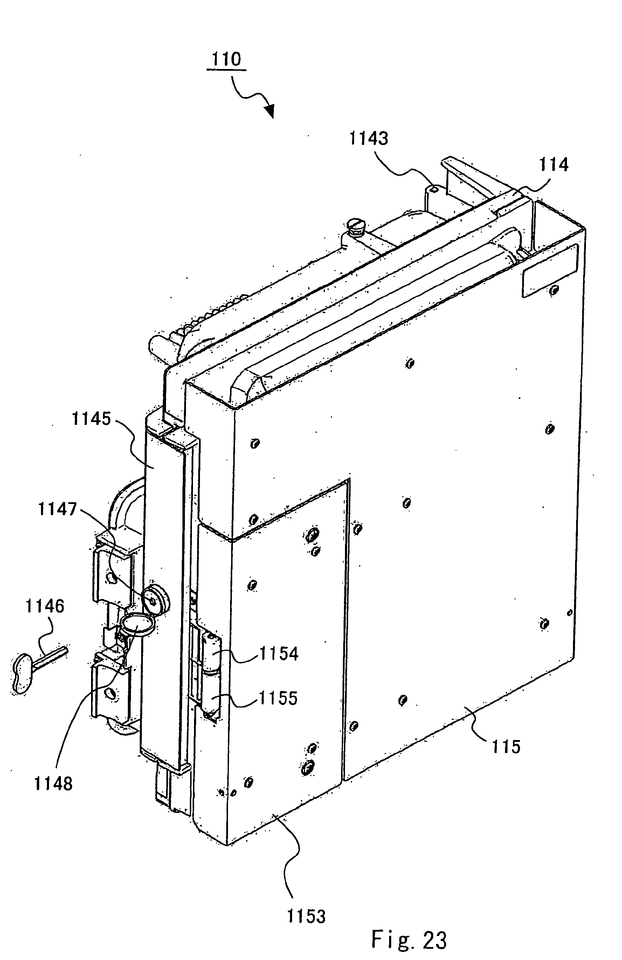

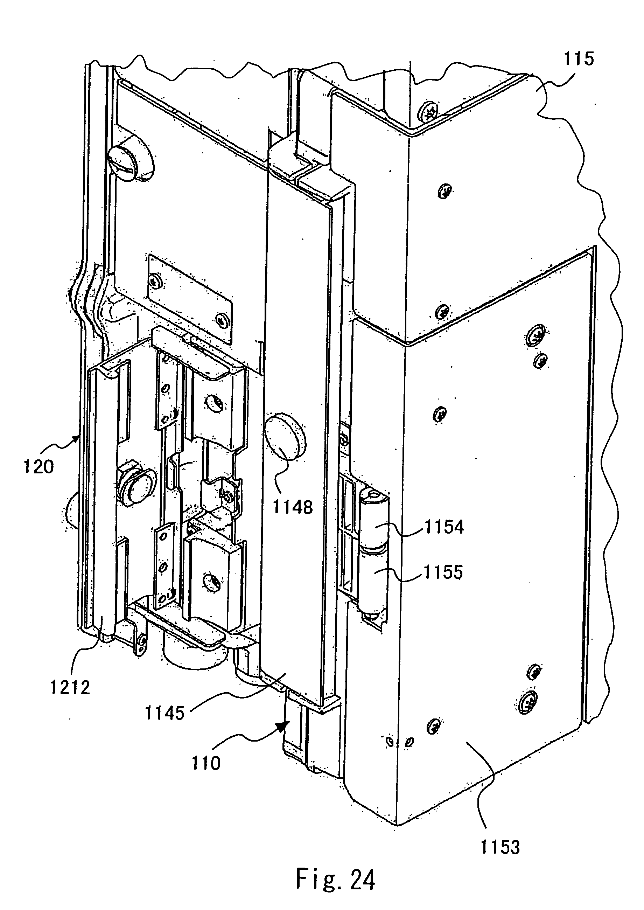

As shown in FIG.23, with MDE cover 115 closed, by inserting MDE cover lock key 1146 in key hole 1147 of MDE cover lock plate 1145 and rotating the key, MDE cover lockplate 1145 locks MDE cover 115 inMDE case 114, thereby reserving safety of MDE unit 110. In addition, as shown in FIG.24, key hole 1147 of MDE cover lock plate 1145 is closed by key hole cover 1148 after locking to prevent rain, dust or the like from entering through key hole 1147.

In the same way as the foregoing, as shown in FIGs.24, 25 and 26, MDE unit lock plate 1212 is provided on the side face on the open and close side of IF unit 120, as means for locking MDE unit 110 in IF unit 120 with MDE unit 110 closed.

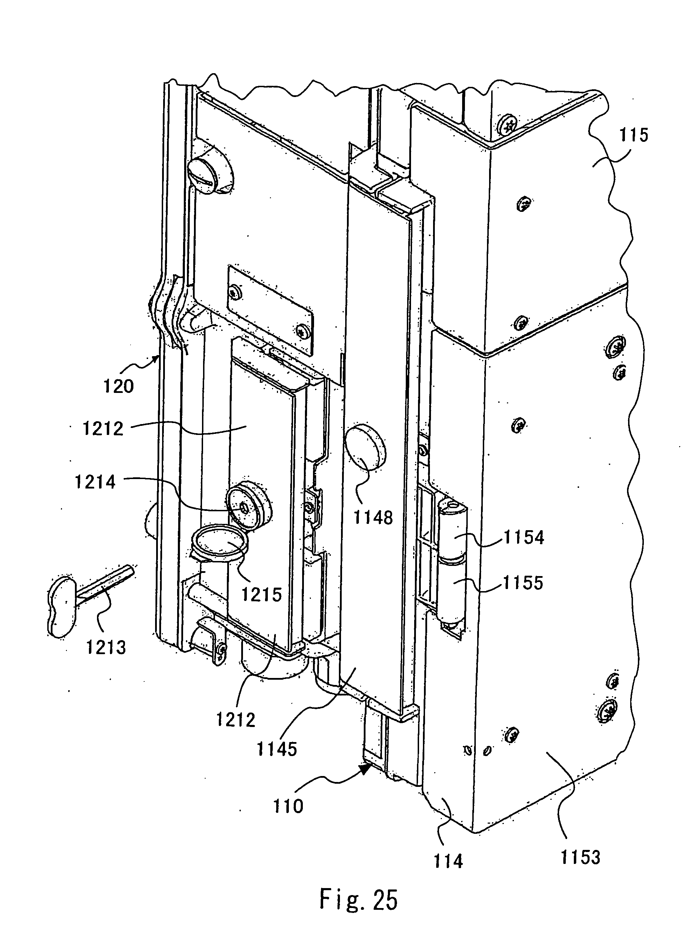

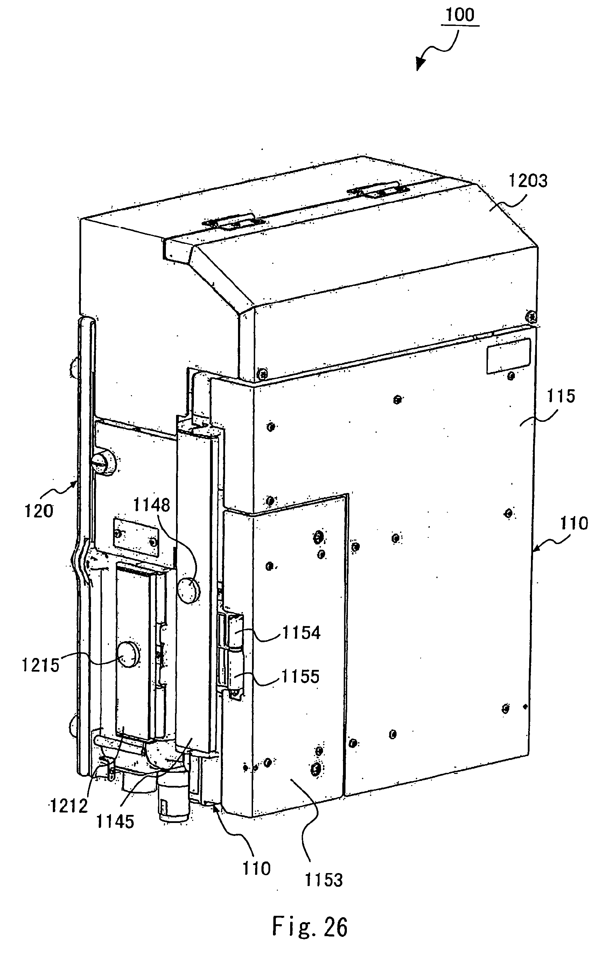

As shown in FIG.25, with MDE unit 110 closed, by inserting MDE unit lock key 1213 in key hole 1214 of MDE unit lock plate 1212 and rotating the key, MDE unit lock plate 1212 locks MDE unit 110 in IF unit 120, thereby reserving safety of MDE unit 110, IF unit 120 and T-PA unit 140. In addition, as shown in FIG.26, key hole 1214 of MDE unit lock plate 1212 is closed by key hole cover 1215 after locking to prevent rain, dust or the like from entering through key hole 1214.

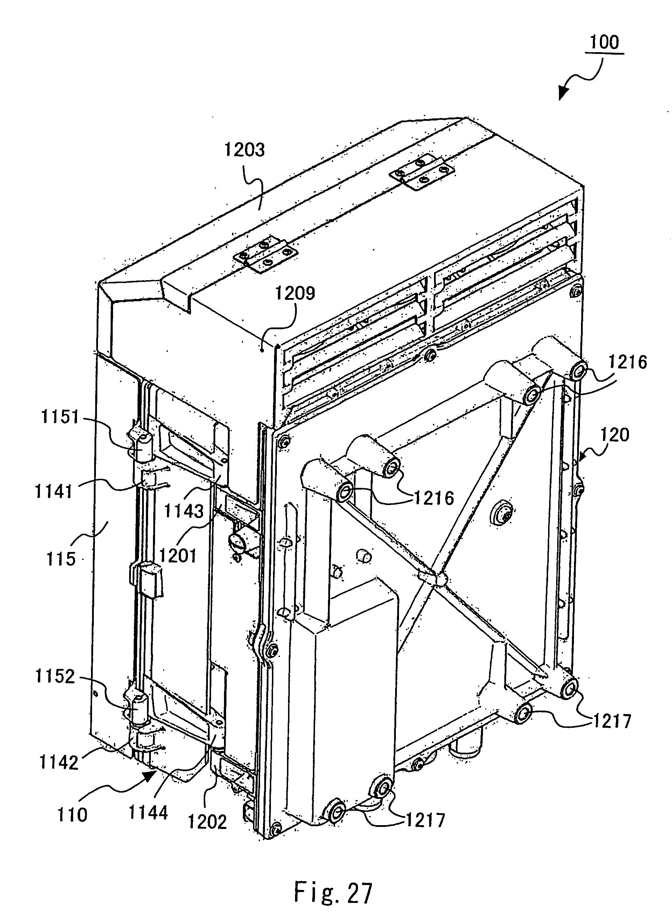

On the back of IF unit 120 that is the main body of base station 100 configured as described above, as shown in FIGs.27, 28 and 29, attaching portions 1216 and 1217 of main-body fixing members 160, 161 and 162 are formed on the main body unit, and used in fixing IF unit 120 to a predetermined installation portion (herein, a pole such as a utility pole).

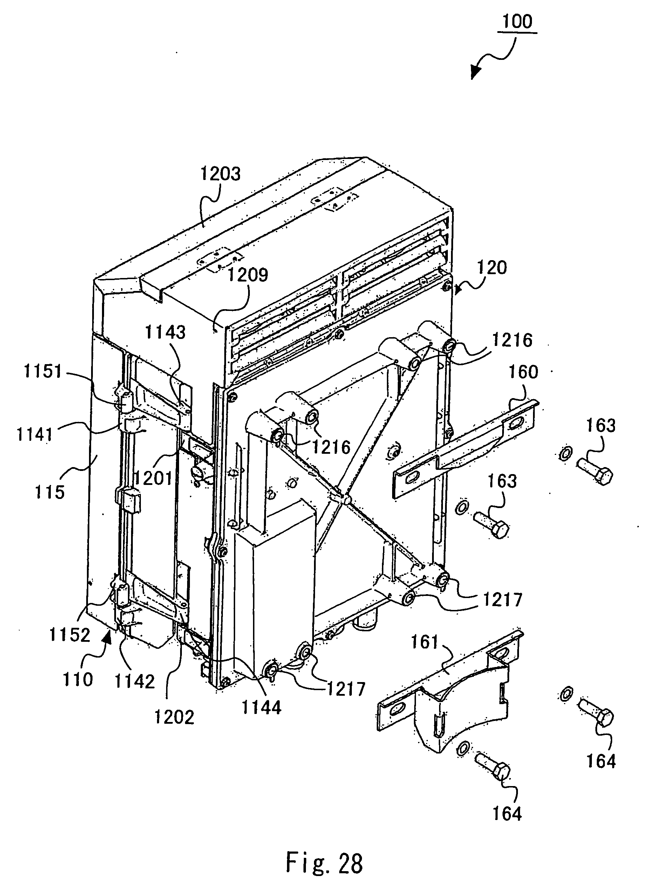

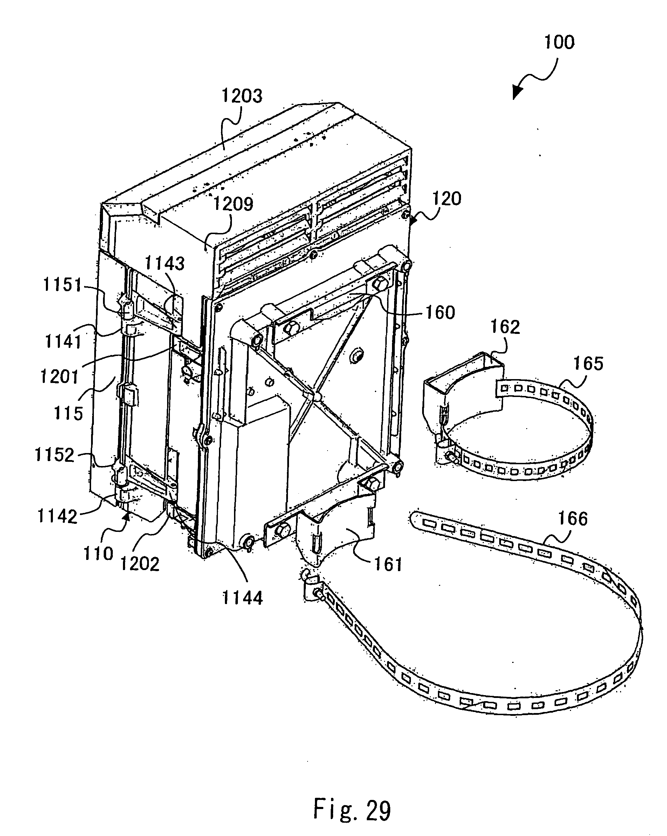

In this way, as shown in FIGs.28 and 29, main-body fixing members 160, 161 and 162 are fixed to attaching portions 1216 and 1217 on the back of IF unit 120 using bolts 163 and 164, fixing bands 165 and 166 are respectively passed through main-body fixing members 161 and 162, and the fixing bands 165 and 166 are wound and tightened around the pole, whereby IF unit 120 is fixed to the pole.

Each of IF unit 120, MDE unit 110, FAN unit 130 and T-PA unit 140 of base station 100 configured as described above is configured to have a weight and size enabling a single person to carry the unit.

Herein, aforementioned "weight and size enabling a single person to carry the unit" are difficult to specify because there are individual differences due to age, health condition, physical ability, etc of an operator. In general, for example, as an average value for an adult operator, it is assumed that the weight is 20kg or less and that the size (height, width and depth) is 600mm or less.

Base station 100 according to this embodiment is divided into MDE unit 110 and IF unit 120 as described above, and therefore, increases the heat radiation area of the entire base station. It is thus possible to reduce sizes and weights of MDE fan 113 and FAN unit 130 provided in base station 100.

In other words, in base station 100, the base station body is broadly divided into IF unit 120 as a main body unit and MDE unit 110 as a detachable unit each with the weight and size enabling a single person to carry the unit.

Accordingly, base station 100 can be installed by a single person in a blind zone considered as being difficult to install such as each floor of a building, underground city,and mountainous area,without requiring manpower and special equipment and materials for installation. It is thus possible to install base station 100 without a great deal of introductory cost and expand a communication area readily and promptly.

Further, in base station 100, IF unit 120 as a main body unit stores equipment hardly causing failures connected to external cables 150 such as power supply device 122 and duplexer 123, while MDE unit 110 as a detachable unit stores electronic circuit boards apt to cause infant mortality failures, setting errors and so on. Thus, according to base station 100, for example, even when a failure occurs in an electronic circuit board such as CNT board P1, TRX board P2, BB0 board P3, BB1 board P4 and motherboard 111, it is possible to restore the communication system rapidly only by exchanging MDE unit 110, and to perform startup and maintenance of the communication system extremely readily and promptly.

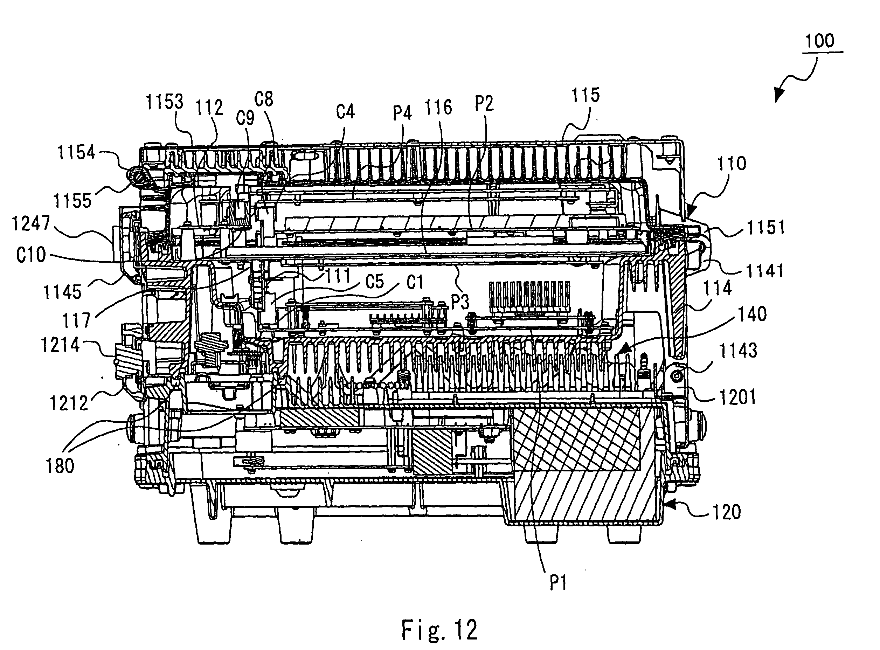

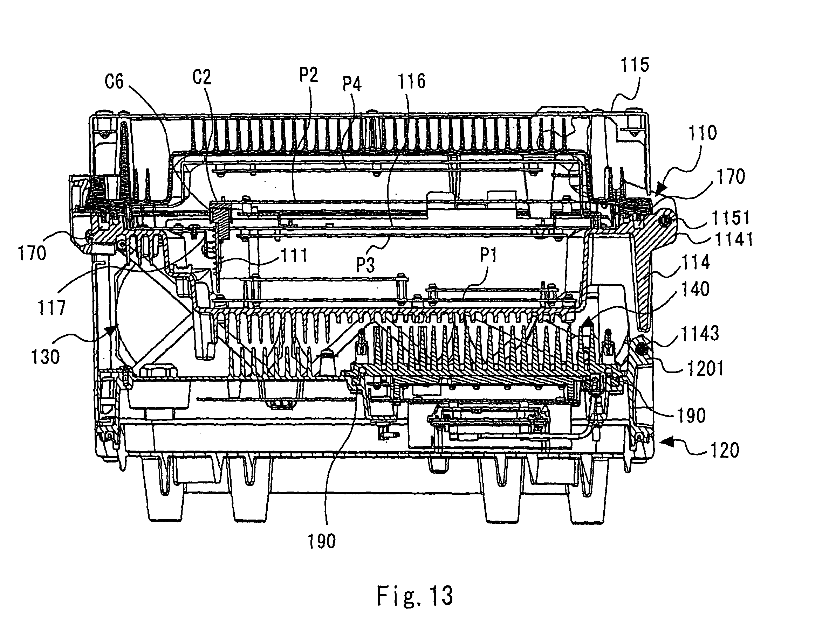

Further, in base station 100, as shown in FIG.12, only portions around connection of connectors C11, C12 and C13 of MDE unit 110 as shown in FIG.16 and connectors C14, C15 and C16 of IF unit 120 are sealed by seal member 180. In other words, MDE unit 110 and IF unit 120 are sealed so as to communicate with each other only in connection portions. Accordingly, base station 100 is capable of increasing heat radiation areas of opposite portions of MDE unit 110 and IF unit 120, and of improving the heat radiation effect. Further, according to this configuration, as shown in FIG.13, it is possible to form clearance communicating with outside air in the opposite portions except connector portions of MDE unit 110 and IF unit 120. By forming such clearance communicating with outside air, it is possible to cause heat emitted from IF unit 120, in which are stored equipment with a high heating value such as power supply device 122, not to directly transfer to MDE unit 110 in which are stored electronic circuit boards easy to suffer effects of heat. Furthermore, in base station 100, as shown in FIG.15, radiating fins 110a and 120a arranged in the vertical direction as radiating members are respectively provided on opposite faces of MDE unit 110 and IF unit 120. In this way, in base station 100, clearance communicating with outside air is provided on opposite portions of MDE unit 110 and IF unit 120, heat dissipation space is thereby provided, and radiating fins 110a and 120a arranged in the vertical direction as radiating members are respectively provided on opposite faces of MDE unit 110 and IF unit 120, whereby the heat dissipation characteristics are extremely improved.

Further, as shown in FIG.12, base station 100 is configured in such a way that open/close portions of IF unit 120 and MDE unit 110 are locked by MDE unit lock plate 121s as locking means with MDE unit 110 closed, and seal member 180 is thereby pressed by MDE unit 110 and IF unit 120.

Thus, according to base station 100, by repulsion force of seal member 180 against pressure, play can be absorbed between MDE unit hinge pins 1143 and 1144 provided in MDE unit 110 and IF unit hinges 1201 and 1202 provided in IF unit 120, and it is thereby possible to suppress occurrence of failures such as a contact failure in a connector portion of the electronic circuit board due to vibration of base station 100.

In addition, MDE case 114 andMDE cover 115 are sealed by seal member 170, while IF unit 120 and T-PA unit 140 are sealed by seal member 190, on respective entire peripheries.

Connectors C14, C15 and C16 of IF unit 120 of base station 100 are configured to follow the open/close operation of MDE unit 110 with respect to IF unit 120 and rotate to maintain connection position relationships between the connectors and connectors C11, C12 and C13, when connected or disconnected to/from connectors C11, C12 and C13 of MDE unit 110. It is thus possible to smoothly perform the operation for connecting or disconnecting connectors C14, C15 and C16 of IF unit 120 to/from connectors C11, C12 and C13 of MDE unit 110.

As shown in FIGs.15 and 16, FAN unit storage portion 1206 of base station 100 has a structure of extending to a portion for preventing MDE unit 110 from moving in the direction in which MDE unit hinge pins 1143 and 1144 are respectively removed from IF unit hinges 1201 and 1202, when MDE unit 110 rotates in the direction from an initial attachment position to IF unit 120 to the closing position.

In this way, when MDE unit 110 rotates in the direction from the initial attachment position to IF unit 120 to the closing position, MDE unit 110 is prevented from moving in the direction in which MDE unit hinge pins 1143 and 1144 are respectively removed from IF unit hinges 1201 and 1202.

Thus, according to base station 100, it does not happen that MDE unit 110 is accidentally removed from IF unit 120 in opening or closing of MDE unit 110, and it is possible to ensure safety in installing base station 100, for example, in a high place such as a utility pole.

Further, in base station 100, as shown in FIG.16, fall prevention cap 1404 prevents MDE unit hinge pin 1144 engaged in IF unit hinge 1202 from being removed from IF unit hinge 1202, and it is thereby possible to further improve safety in attaching or detaching MDE unit 110 to/from IF unit 120.

In base station 100, since MDE unit 110 is provided with CNT board P1 constituting modulation and demodulation equipment to modulate and demodulate transmission and reception signals, TRX board P2, BB0 board P3 and BB1 board P4, it is possible to readily exchange the modulation and demodulation equipment apt to suffer effects of heat and cause an infant mortality failure and communication failure due to a design error, etc, and it is possible to perform startup, maintenance, and other operation of the system easier.

As shown in FIGs.6 and 7, in base station 100, at least one connector, C8, among a plurality of connectors of motherboard 111 is a connector for use in attaching BB1 board P4 (printed-circuit board) for expansion for the modulation and demodulation equipment, and it is thus possible to readily increase the number of channels of the modulation and demodulation equipment without operating IF unit 120.

In base station 100, as shown in FIGs.28 and 29, attaching portions 1216 and 1217 of main-body fixing members 160 and 161 used in fixing IF unit 120 to a predetermined installation portion are formed on the back of IF unit 120, and it is thus possible to beforehand fix IF unit 120 to a predetermined installation portion using main-body fixing members 160 and 161 attached to attaching portions 1216 and 1217. Therefore, according to base station 100, IF unit 120 does not swing or fall in attaching or detaching MDE unit 110 to/from IF unit 120, and it is possible to perform the operation of installing base station 100 safety and promptly. In particular, in the case of installing base station 100 in a high place such as a utility pole, IF unit 120 is beforehand fixed to an installtion portion using main-body fixing members 160 and 161, the operation is then carried out to attach MDE unit 110, and it is thereby possible to prevent occurrence of accidents such that IF unit 120 falls in such operation. Further, according to this constitution, since main-body fixing members 160 and 161 are attached afterward to attaching portions 1216 and 1217 of IF unit 120, IF unit 120 of a state prior to installation can be reduced in size and weight, and carry and packing of IF unit 120 can be facilitated.

In IF unit 120 of base station 100 is formed ventilating opening 1218 (see FIG.3) of size capable of preventing liquid from entering by Gore-Tex filter. Therefore, according to base station 100, since air comes in and out through ventilating opening 1213, the internal atmospheric pressure inside MDE unit 110, IF unit 120 and T-PA unit 140 is equal to the external atmospheric pressure, negative pressure does not occur inside base station 100, water and dust does not enter due to negative pressure inside base station 100, and it is possible to improve water resistance and dust resistance of base station 100.

As described above, motherboard 111 of base station 100 according to this embodiment is configured so that the direction of attaching or detaching connectors of CNT board P1, TRX board P2 and BB1 board P4 respectively to/from connectors of motherboard 111 is the same as the direction of attaching CNT board P1, TRX board P2 and BB1 board P4 to MDE case 114 of MDE unit 110. Therefore, according to base station 100, it is possible to attach CNT board P1, TRX board P2 and BB1 board P4 to MDE case 114 of MDE unit 110 without imposing stress on CNT board P1, TRX board P2 and BB1 board P4, with connectors of CNT board P1, TRX board P2 and BB1 board P4 respectively connected to connectors of motherboard 111.

Thus, when motherboard 111 as described above is used, failures do not occur due to stress caused by attaching to MDE case 114 MDE unit 110 with printed-circuit boards such as CNT board P1, TRX board P2 and BB1 board P4 attached to motherboard 111. Accordingly, in motherboard 111 of base station 100, it does not happen that an exchanged new printed-circuit board causes the same failure again by the stress when the new printed-circuit board is exchanged and attached.

Further, motherboard 111 of base station 100 is configured so that BB1 board P4 for expansion is provided in an exposed portion in such a state that MDE cover 115 attached to MDE case 114 to be openable and closable is opened. Since BB1 board P4 is provided in such an exposed position, it is possible to readily perform the operation of attaching or detaching BB1 board P4 to MDE unit 110.

Since base station 100 is provided with motherboard 111 with the aforementioned configuration, it is possible to construct a communication system where failures hardly occur in CNT board P1, TRX board P2 and BB1 board P4.

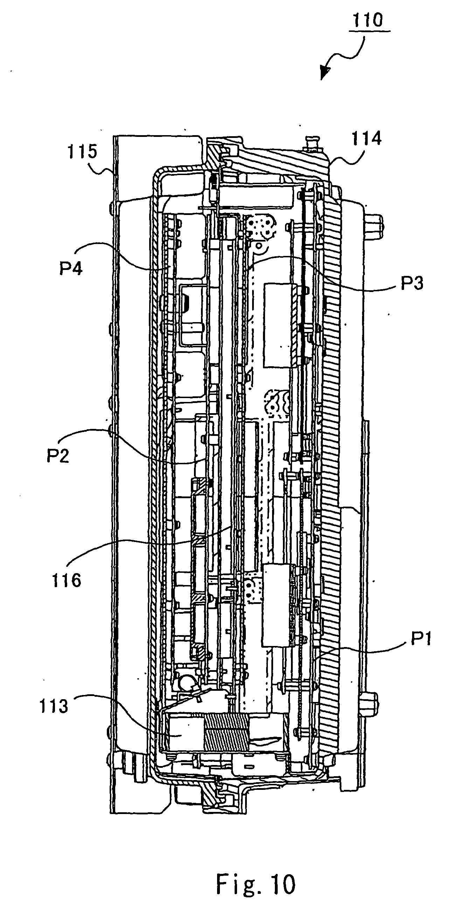

Further, as shown in FIG.10, in base station 100, a ventilation path of MDE fan 113 is formed between TRX board P2, BB0 board P3 and BB1 board P4 formed of small-size printed-circuit boards and an inner wall of MDE case 114 of MDE unit 110, and it is thus possible to efficiently cool each of the printed-circuit boards arranged inside MDE unit 110 by MDE fan 113, and to suppress occurrence of failures due to heat in each of the printed-circuit boards.

Furthermore, in base station 100, a radiating member such as board plate 116 as descried above can be provided to come into contact with CNT board P1, TRX board P2, BB0 board P3 and BB1 board P4 provided in MDE unit 110, and it is thus possible to further suppress occurrence of failures due to heat in each of the printed-circuit boards.

Moreover, in base station 100, by using a heat pipe as the radiating member, it is possible to further improve the heat dissipation characteristics of CNT board P1, TRX board P2, BB0 board P3 and BB1 board P4.

This application is based on the Japanese Patent Applications No.2003-168502 and No.2003-168503 filed on June 12, 2003, entire contents of which are expressly incorporated by reference herein.

### Industrial Applicability

As described above, in the present invention, since an external container is divided, each external container is reduced in size and operability is improved. Further, since heat dissipation space is provided between divided external containers and a radiating member is provided on an opposite face of each of the external containers, the present invention has a feature of extremely improving the heat dissipation characteristics, and is useful as a base station in a communication system, in particular, a radio base transceiver station in a 3rd generation mobile communication system.

## Claims

1. A base station, wherein an external container is divided into a first flat-type external container that is fixed to an installation place and a second flat-type external container that holds circuit boards and that is detachably attached to the first external container, and the second external container is disposed on the outside of the first external container with heat dissipation space provided therebetween.

2. The base station according to claim 1, wherein a radiating member is provided on each of opposite faces of the first external container and the second external container.

3. The base station according to claim 2, wherein the first external container holds a power supply.

4. The base station according to claim 1, wherein the first external container and the second external container each have the airtightness, while communicating with each other in internal space thereof.

5. The base station according to claim 1, wherein a fan unit is provided on an upper face of the first external container, the fan unit absorbing air from between the first external container and the second external container to discharge.

6. The base station according to claim 1, further comprising:
a motherboard which has a plurality of motherboard connectors connected to respective printed-circuit board connectors provided in a plurality of printed-circuit boards, and which is configured so that the direction of attaching/detaching the printed-circuit board connectors to/from the motherboard connectors is the same as the direction of attaching the printed-circuit boards to the external container.

7. The base station according to claim 6, further comprising:
a cooling fan to control the temperature inside the external container to which the motherboard is attached, wherein printed-circuit boards with small areas are provided in a central portion of the external container among the plurality of printed-circuit boards attached to the motherboard, and a ventilation path of the cooling fan is formed between the printed-circuit boards with small areas and the external container.

8. The base station according to claim 6, further comprising:
a radiating member that cools at least one of the plurality of printed-circuit boards in a state where a plurality of the printed-circuit board connectors are connected to the plurality of motherboard connectors.

9. The base station according to claim 8, wherein the radiating member has a heat pipe.

10. A base station comprising:
a first external container that is fixed to an installation place; and
a second external container that holds a plurality of stacked circuit boards and that is detachably attached to the first external container,
wherein clearance for heat dissipation communicating with outside air is provided between the first external container and the second external container, and the first external container and the second external container are provided opposite to each other in the direction in which the circuit boards are laminated.

11. The base station according to claim 10, wherein a radiating member is provided on each of opposite faces of the first external container and the second external container.

12. The base station according to claim 11, wherein the first external container holds a power supply.

13. The base station according to claim 10, wherein the first external container and the second external container each have the airtightness, while communicating with each other in internal space thereof.

14. The base station according to claim 10, wherein a fan unit is provided on an upper face of the first external container, the fan unit absorbing air from between the first external container and the second external container to discharge.

15. The base station according to claim 10, further comprising:
a motherboard in which is provided a plurality of motherboard connectors connected to respective printed-circuit board connectors provided in a plurality of printed-circuit boards, and which is configured so that the direction of attaching/detaching the printed-circuit board connectors to/from the motherboard connectors is the same as the direction of attaching the printed-circuit boards to the external container.

16. The base station according to claim 15, further comprising:
a cooling fan to control the temperature inside the external container to which the motherboard is attached, wherein printed-circuit boards with small areas are provided in a central portion of the external container among the plurality of printed-circuit boards attached to the motherboard, and a ventilation path of the cooling fan is formed between the printed-circuit boards with small areas and the external container.

17. The base station according to claim 15, further comprising:
a radiating member that cools at least one of the plurality of printed-circuit boards in a state where a plurality of the printed-circuit board connectors are connected to the plurality of mother board connectors.

18. The base station according to claim 17, wherein the radiating member has a heat pipe.

19. A motherboard in which is provided a plurality of motherboard connectors connected to respective printed-circuit board connectors provided in a plurality of printed-circuit boards attached to an external container, and which is configured in such a manner that the direction of attaching/detaching the printed-circuit board connectors to/from the motherboard connectors is the same as the direction of attaching the printed-circuit boards to the external container.

20. The motherboard according to claim 19, wherein the plurality of printed-circuit boards is a CNT board constituting a control device in modulation and demodulation equipment to modulate and demodulate transmission and reception signals, a TRX board constituting a transmission and reception card, a BB0 board for standard equipment constituting a baseband signal processor, and a BB1 board for expansion constituting a baseband signal processor.

21. The motherboard according to claim 21, wherein the external container is comprised of an external container case and an external container cover attached to the external container case to be openalbe and closable, and the BB1 board for expansion is provided in a portion exposed in a state where the external container cover is opened.

## Amended claims

### Amended claims under Art. 19.1 PCT

to the motherboard, and a ventilation path of the cooling fan is formed between the printed-circuit boards with small areas and the external container.
**17.** The base station according to claim 15, further comprising:
a radiating member that cools at least one of the plurality of printed-circuit boards in a state where the plurality of printed-circuit board connectors are connected to the plurality of mother board connectors.
**18.** The base station according to claim 17, wherein the radiating member has a heat pipe.
**19.** (Amended) A motherboard in which is provided a plurality of motherboard connectors connected to respective printed-circuit board connectors provided in a plurality of printed-circuit boards attached to an external container, and which is configured in such a manner that a direction of attaching/detaching the printed-circuit board connectors to/from the motherboard connectors is the same as an attaching direction in which the printed-circuit boards are attached to the external container except at least one of the printed-circuit boards that is attached in a direction perpendicular to the attaching direction.
**20.** The motherboard according to claim 19, wherein the plurality of printed-circuit boards is a CNT board constituting a control device in modulation and demodulation equipment to modulate and demodulate transmission and reception signals, a TRX board constituting a transmission and reception card, a BB0 board for standard equipment constituting a baseband signal processor, and a BB1 board for expansion constituting a baseband signal processor.
**21.** (Amended) The motherboard according to claim 20, wherein the external container is comprised of an external container case and an external container cover attached to the external container case to be openable and closable, and the BB1 board for expansion is provided in a portion where a radiating member is exposed with the external container cover opened.
